# DEMANDE DE BREVET EUROPEEN

(11) **EP 1 079 162 A1**
(43) Date de publication de la demande: **28.02.2001**
(21) Numéro de dépôt: 00402081.4
(22) Date de dépôt: 21.07.2000
(51) Int. Cl.: F16L 9/00, F16L 11/12, G09F 3/00

(54) **Procédé d'identification et de marquage de tuyaux et de leurs raccords, notamment de tuyaux d'arrosage**

(30) Priorité: 27.08.1999 FR 9910837
(71) Demandeur: EXEL INDUSTRIES, 51200 Epernay (FR)
(72) Inventeur: Ballu, Patrice, 51100 Reims (FR)
(74) Mandataire: Loyer, Bertrand

(57) **Abrégé**

Procédé de marquage et d'identification de tuyaux et de leurs moyens de raccordement, dont chaque tuyau (1) et le raccord (2) qui lui est destiné sont tous deux munis de moyens de marquage correspondants, ces moyens consistant en une couleur et des lignes (11) déterminés et disposés de façon à constituer un code signalétique qui se retrouve à la fois sur le tuyau (1) et son raccord (2).

## Description

La présente invention concerne un procédé d'identification et de marquage de tuyaux et de leurs raccords, ce procédé étant particulièrement destiné à résoudre les problèmes que posent aux utilisateurs les tuyaux d'arrosage.

La multiplication des résidences secondaires, munies de jardins, a pour effet que les dispositifs d'arrosage, manuels ou automatiques, se sont multipliés.

Les tuyaux souples pour l'arrosage sont de diamètres intérieurs divers : 12,5, 15, 17, 19 et 25 mm ou plus et leurs diamètres extérieurs sont parfois suffisamment voisins, selon leur épaisseur, pour que l'utilisateur les distingue mal les uns des autres, ce qui lui pose des problèmes, lorsqu'il achète les dispositifs de raccordement à un robinet ou les dispositifs de raccord rapide permettant de raccorder entre eux plusieurs tuyaux, car il lui arrive souvent de se tromper et ainsi d'avoir des dispositifs de raccordement qui ne s'adaptent pas aux diamètres intérieurs des tuyaux qu'il possède ou inversement.

A cela s'ajoute le fait qu'il existe plusieurs qualités de tuyaux souples suivant la nature de leur armature : il y a, entre autres, le tuyau dit "guipé" qui comporte une armature hélicoïdale croisée ; le tuyau dit "tricoté" qui a une armature tissée ; le tuyau dit "renforcé" qui comporte, dans sa masse, une spirale en matériau plus dur qui lui permet de résister à l'aspiration.

Tous ces tuyaux ne comportent pas (ou très rarement) le marquage du diamètre intérieur, sauf sur les étiquettes et les emballages perdus ; les dispositifs de raccordement comportent des indications également sur l'emballage; toutes ces indications sont difficiles à percevoir, à comprendre avant l'achat, et disparaissent après l'achat, si bien que le consommateur s'y perd et souvent ses achats sont inutilisables car inadaptés entre eux.

La présente invention a pour but de remédier à cette situation trop compliquée.

La présente invention concerne un procédé de marquage et d'identification de tuyaux et de leurs moyens de raccordement, caractérisé par le fait que le tuyau et le raccord qui lui est destiné sont munis de moyens de marquage correspondants, ces moyens consistant en : une couleur et des lignes ; ces moyens de marquage étant déterminés en fonction du diamètre interne du tuyau et de son raccord ; de la nature de sa structure ; et de la nature de son utilisation.

Selon l'invention :
a). la couleur peut être déterminée en fonction du diamètre interne du tuyau et de son raccord ;
b). cette couleur peut apparaître sur la surface externe en la recouvrant en totalité ou au moyen de une ou plusieurs lignes ;
c). cette couleur peut être disposée également sur la surface interne ;
d). les lignes peuvent également varier en nombre en largeur et/ou en écartement ;
e). les lignes peuvent être constituées de segments interrompus ;
f). les lignes peuvent être des successions de points de forme quelconque ;
g). la couleur peut être déterminée en fonction de l'utilisation du tuyau : hydraulique, incendie, alimentaires ou autres.

A titre d'exemple non limitatif et pour faciliter la compréhension de l'invention, on a représenté aux dessins annexés :
- Figure 1 une vue en perspective d'un tuyau muni des moyens de marquage, selon l'invention ;
- Figure 2 une vue en élévation latérale d'un tuyau selon la figure 1, muni d'un raccord également marqué selon l'invention.

En se reportant à ces figures on voit que le tuyau 1, qui est de préférence un tuyau souple destiné à l'arrosage, est muni de moyens de raccordement 2 qui permettent de le relier soit à un robinet, soit à un arroseur, soit à un autre tuyau.

Le tuyau 1 peut avoir plusieurs diamètres intérieurs, les diamètres les plus souvent utilisés étant 15 mm, 17 mm, 19 mm, 21 mm et 25 mm.

Le procédé selon l'invention consiste à établir un code de correspondance signalétique entre le tuyau 1 et le raccord 2 qui lui est destiné, au moyen de signes extérieurs facilement repérables tels que couleurs et lignes.

Dans le cas de tuyau destiné à l'arrosage, on peut par exemple affecter une couleur à un diamètre interne :
- orange pour le diamètre de 15 mm,
- bleu pour le diamètre de 17 mm,
- vert pour le diamètre de 19 mm,
- jaune pour le diamètre de 25 mm
et à recouvrir extérieurement soit totalement, soit partiellement, la surface extérieure 10 du tuyau 1 de la couleur correspondant à son diamètre interne et, simultanément, à donner la même couleur à tout ou partie du moyen de raccordement 2, qui correspond à ce diamètre interne.

La paroi interne du tuyau peut recevoir la même couleur.

On peut, soit recouvrir en totalité la surface externe 10 (et éventuellement sa surface interne) de la couleur choisie, ou bien la surface externe 10 étant d'une couleur quelconque, disposer cette couleur au moyen de lignes telles que 11.

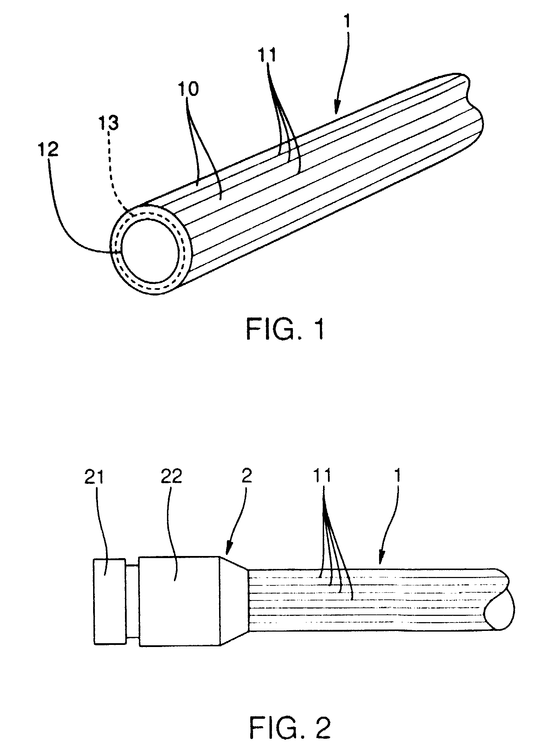

Dans l'exemple de la figure 2, le moyen de raccordement 2 comporte une partie d'adaptation 21 qui assure son adaptation à un robinet, un accessoire d'arrosage ou autre et une partie 22 qui permet sa fixation au tuyau.

Au moins la partie 22 intérieure ou extérieure reçoit le même code de couleur que le tuyau, que ce soit par une coloration de toute la surface ou par des lignes.

Sur les figures 1 et 2, le tuyau ayant, à titre d'exemple un diamètre de 19 mm, la surface 10 du tuyau 1 a une couleur quelconque, mais les lignes 11 sont vertes et la partie de fixation 22 du raccord 2 est également verte : ainsi l'utilisateur ne peut pas se tromper et, quand son installation est en place il peut, de loin, identifier le diamètre de ses tuyaux.

Les lignes 11 remplissent deux fonctions : d'une part du fait de leur couleur elles permettent de connaître au premier coup d'oeil le diamètre du tuyau ; d'autre part leur écartement ou leur épaisseur (largeur) ou leur nombre permet d'identifier la nature de l'armature 13 du tuyau, donc sa qualité.

En effet, selon l'invention, les lignes sont plus ou moins espacées, plus ou moins larges ou plus ou moins nombreuses les unes des autres en fonction de la qualité de l'armature.

On peut choisir que plus l'armature est solide, plus les lignes sont serrées, nombreuses ou épaisses.

Ainsi par exemple pour l'armature la moins résistante, l'écartement des lignes sera maximum ou leur nombre plus faible ou leur largeur plus fine et, plus l'armature sera résistante, plus les lignes 11 seront serrées les unes contre les autres, ou leur nombre élevé ou leur épaisseur élevée.

Toujours à titre d'exemple :
- un tuyau guipé de 19 mm aura 2 lignes 11 de couleur verte,
- un tuyau tricoté de 19 mm aura 4 lignes 11 de couleur verte,
- un tuyau renforcé aspiration de 19 mm aura 6 lignes 11 de couleur verte.

Ainsi, dans le magasin, l'acheteur pourra déterminer au premier coup d'oeil le diamètre et la qualité du tuyau qu'il achète, ainsi que le moyen de raccordement qui lui correspond.

Selon une variante, la paroi interne 12 du tuyau peut également être de la couleur déterminée en fonction du diamètre.

Comme dit précédemment, la couleur extérieure qui permet d'identifier le diamètre peut être disposée soit sur toute la surface externe 10 du tuyau 1, soit seulement au moyen des lignes 11.

Dans le cas où la couleur est disposée sur toute la surface 10, la couleur des lignes peut être quelconque : il suffit qu'elle fasse suffisamment contraste avec la couleur de la surface 10 pour que l'écartement des lignes 11 soit facilement discernable.

Les lignes peuvent être disposées de diverses façon : dans l'exemple représenté, elles sont longitudinales et parallèles, mais elles peuvent être en spirale.

Au lieu de faire varier leur écartement, on peut faire varier leur largeur.

On peut également les disposer en pointillés ou en tiretés en déterminant la longueur des segments de façon appropriée.

On peut également les réaliser sous forme de rangées de points, ces points pouvant être ronds, ovales ou carrés et ayant des dimensions et des espacements déterminés.

Selon une variante de mise en oeuvre du procédé de marquage selon l'invention, la couleur peut non pas indiquer un diamètre mais un usage.

On aurait alors par exemple, la couleur noire pour l'hydraulique, rouge pour l'incendie et transparent pour l'alimentaire.

Les lignes seraient dans ce cas, employées pour désigner une qualité telle, par exemple, que la résistance à la pression, en étant plus ou moins larges ou plus ou moins espacées.

Dans ce cas également, le code de marquage utilisé pour le tuyau doit être reproduit sur le moyen de raccordement, qu'il soit métallique ou en matière plastique.

L'invention vise également à titre de produits industriels nouveaux les tuyaux et raccords selon le procédé ci-dessus décrit.

## Revendications

1. Procédé de marquage et d'identification de tuyaux et de leurs moyens de raccordement caractérisé par le fait que chaque tuyau (1) et le raccord (2) qui lui est destiné sont tous deux munis de moyens de marquage qui se correspondent, ces moyens consistant en une couleur et des lignes (11) déterminés et disposés de façon à constituer un code signalétique qui se retrouve à la fois sur le tuyau (1) et son raccord (2).

2. Procédé selon la revendication 1, selon lequel la couleur est déterminée en fonction du diamètre interne du tuyau (1) et du raccord (2) qui lui est destiné.

3. Procédé selon la revendication 1, selon lequel la couleur est déterminée en fonction de l'utilisation du tuyau (1) (hydraulique, incendie, alimentaire ou autres).

4. Procédé selon la revendication 1, selon lequel les lignes (11) sont utilisées pour compléter le code signalétique par leur couleur, leur nombre, leur écartement entre elles, et/ou leur épaisseur.

5. Procédé selon la revendication 4, selon lequel les lignes (11) sont continues ou discontinues, rectilignes ou en spires ou selon tout tracé voulu.

6. Procédé selon la revendication 4, selon lequel les lignes (11) sont constituées d'une succession de points de forme, de dimensions et d'écartement déterminés en fonction de la signalétique voulue.

7. Procédé de marquage selon la revendication 2, dans lequel la couleur, déterminée en fonction du diamètre du tuyau (1), recouvre la totalité de la surface (10) du tuyau (1).

8. Procédé selon la revendication 2, dans lequel la couleur, déterminée en fonction du diamètre du tuyau (1), est déposée au moyen de lignes (11) de ladite couleur.

9. Procédé selon la revendication 7, dans lequel la surface externe (10) du tuyau (1) est munie d'une pluralité de lignes (11) d'une couleur quelconque.

10. Procédé selon la revendication 8 ou 9, dans lequel l'écartement des lignes (11) est déterminé en fonction de la nature de l'armature du tuyau (1).

11. Procédé selon l'une quelconque des revendications précédentes, dans lequel la surface interne (12) est également de la couleur correspondant au diamètre du tuyau (1).

12. Procédé selon la revendication 3 selon lequel, la couleur étant destinée à indiquer l'usage du tuyau (1), les lignes (11) sont utilisées pour compléter la signalétique concernant la qualité du tuyau, comme, par exemple, sa résistance à la pression.

13. Tuyau (1) et moyens de raccordements selon les revendications 1 à 12.
